# EUROPÄISCHE PATENTSCHRIFT

(11) **EP 3 916 454 B1**
(45) Veröffentlichungstag und Bekanntmachung des Hinweises auf die Patenterteilung: **02.07.2025**
(21) Anmeldenummer: 21174629.2
(22) Anmeldetag: 19.05.2021
(51) Int. Cl.: G02B 6/38, G02B 6/44

(54) **PATCHMODUL**
PATCH MODULE
MODULE DE CONNEXION

(30) Priorität: 29.05.2020 DE 102020003259
(43) Veröffentlichungstag der Anmeldung: 01.12.2021
(73) Patentinhaber: Hauff-Technik GRIDCOM GmbH, 73494 Rosenberg (DE)
(72) Erfinder: GSCHWINDER, Roland, 73431 Aalen (DE)
(74) Vertreter: Szynka Smorodin Patentanwälte Partnerschaft mbB

(56) Entgegenhaltungen:
- EP-A1- 2 290 418
- WO-A1-2013/120508
- DE-A1- 19 956 067
- DE-B3- 102009 013 299
- DE-T2- 69 521 305
- DE-U1- 202009 001 709
- DE-U1- 202013 012 809
- DE-U1- 202018 000 741
- US-A- 5 758 002

## Beschreibung

Die Erfindung betrifft einen Stapel aus Patchmodulen mit je einer Mehrzahl Patchstellen zum LWL-Kabelmanagement (LWL: Lichtwellenleiter) sowie einen Verteilerschrank mit solchen Stapeln und Verwendungen des Stapels und des Verteilerschranks.

LWL-Kabel dienen zur Signalübertragung mit hohen Übertragungsraten und/oder hoher räumlicher Reichweite und finden immer stärkeren Einsatz. Insbesondere werden zunehmend die LWL-Kabelnetze bis zum Verbraucher verlegt oder sogar bis zum Endgerät im Haushalt oder Büro. Mit dem Ausbau der LWL-Kabelnetze stellt sich immer häufiger die Aufgabe der Verbindung von LWL-Kabeln untereinander.

Dabei werden die einzelnen Fasern mit einer an sich bekannten Technologie aneinandergefügt und diese sogenannten Spleiß- und Patchstellen in ebenfalls an sich bekannter Weise geordnet sowie zugänglich und geschützt untergebracht. Man spricht z. B. von Spleißmodulen, in denen typischerweise eine Mehrzahl (z. B. zwölf oder eine Vielzahl von zwölf) Glasfasern in Kabeln mit jeweils einer einzelnen Glasfaser in jeweiligen Spleißkassetten gespleißt sind und mit kurzen Anschlusskabeln (Pigtails) auf Abschlusselemente (etwa Stecker und Kupplungen) geführt werden. Dort können dann zur Weiterführung der Glasfaserverbindungen LWL-Kabel mit Verbindungselementen (etwa Steckern), insbesondere Patchkabel, eingesetzt werden. Im Folgenden bezieht sich der Begriff des LWL-Kabels also auf einen Kabeltyp im Bereich eines solchen Spleiß- oder Patchmoduls und nicht auf ein bspw. unter einer Straße vergrabenes "Glasfaserkabel" mit einem dicken und vielfältigen Bündel einzelner Fasern.

Zur Zugänglichkeit zu den einzelnen Spleiß- und Patchstellen verfügen bekannte Module typischerweise über einen bewegten schubladenähnlichen Auszug und eine ortsfeste Halterung. Bei besonderen Varianten ist der Auszug nicht translatorisch auszuziehen, sondern um eine Schwenkachse, typischerweise in der Nähe der Ecke der Halterung, aufschwenkbar. Beispielhaft kann verwiesen werden auf die EP 2 221 650 A1.

Patchmodule können allerdings auch ohne im selben Modul vorgesehene Spleißstellen auftreten und ganz grundsätzlich handelt es sich dabei um Module mit einer Mehrzahl Steckverbindungen für LWL-Kabel, nämlich sogenannten Patchstellen. Im Regelfall ist dabei eines der beteiligten LWL-Kabel seinerseits ein Patchkabel, verfügt also auch an seinem anderen Ende über ein Steckverbindungselement.

Patchmodule mit einer Mehrzahl an Spleißkassetten bzw. Trägersysteme mit einem Stapel an Patchmodulen sind bekannt. So zeigt die DE 20 2013 012 809 U1 ein Spleißmodul, bei der auf einer Kassettenträgerplatte mehrere vertikal übereinander angeordnete Spleißkassetten angeordnet sind. Auf der Kassettenträgerplatte befindet sich auch eine Patcheinheit mit einer davor angebrachten Ablage, die dazu dient, das Durchhängen angeschlossener Patchkabel zu verhindern. Das Spleißmodul ist dabei als Drehlade innerhalb eines Stapels solcher Patchmodule ausgeführt.

Die DE 20 2018 000 741 U1 offenbart auch einen Stapel aus mehreren Patchmodulen, die jeweils wiederum mehrere Spleißkassetten enthalten. Zusätzlich enthält jedes Patchmodul eine Patcheinheit, bei der ein zusätzlicher Durchgang zur Durchführung von Lichtwellenleitern realisiert ist.

Die DE 10 2009 013 299 B3 offenbart ein Patchmodul, bei dem zwei Reihen an Patchstellen hintereinander angeordnet sind, und aus solchen Patchmodulen gebildete Stapel. Dadurch soll die Packungsdichte an Lichtwellenleitern verdoppelt werden.

Die DE 20 2009 001 709 U1 offenbart ein Traggestell mit auswechselbaren Einheiten, welche jeweils eine Mehrzahl an Patchmodulen enthalten. Die Patchmodule enthalten dabei eine herausdrehbare Schwenkkassette, welche wiederum eine Faserablage sowie schräg angeordnete Patcheinheiten enthält.

Die US 5,758,002 offenbart ein Traggestell zur Aufbewahrung und/oder Verkabelung von Lichtwellenleitern. Die Patchkabel werden dabei an variabel montierbare und gestapelte Patchmodule angeschlossen, und die Kabel durch geeignete Führungselemente fixiert. Während der Montage oder Demontage von Lichtwellenleitern können nicht benötigte Staubschutzkappen in einer Ablage abgelegt werden, welche wiederum variabel in verschiedener Höhe des Traggestells befestigt werden kann. Dieses Dokument stellt den nächstliegenden Stand der Technik dar.

Der vorliegenden Erfindung liegt die Aufgabe zugrunde, eine besonders praktische Ausgestaltung für einen Patchmodulstapel und einen Verteilerschrank zum LWL-Kabelmanagement und vorteilhafte Verwendungen dazu anzugeben.

Hierzu richtet sich die Erfindung auf einen Patchmodulstapel nach Anspruch 1, einen Verteilerschrank nach Anspruch 12 und Verwendungen nach Ansprüchen 13 und 14.

Der Erfindung zugrunde liegt also ein Patchmodul, das neben der Mehrzahl Patchstellen eine Ablage aufweist, die für bei der Montage oder Benutzung des Patchmoduls relevante Kleinteile benutzt werden kann und dazu nach oben offen ist. Insbesondere kann eine solche Ablage sehr praktisch sein für Staubschutzkappen, die an unbenutzten Patchstellen montiert sind oder montiert werden sollen. Solche Staubschutzkappen haben, wie der Name sagt, die Funktion der Verhinderung des Verstaubens offenliegender Bereiche einer Patchstelle. Wenn also nur eines der Steckverbindungselemente am Platz ist, die Verbindung also offen ist, kann mit einer solchen Staubschutzkappe eine Verschmutzung bis zu dem Zeitpunkt verhindert werden, zu dem die Verbindung geschlossen, also das zweite Steckverbindungselement angesteckt wird.

Umgekehrt ist es von Interesse, solche Staubschutzkappen greifbar zu halten, falls eine Patchstelle bzw. die dortige Verbindung für länger als nur einen sehr kurzen Zeitraum gelöst wird. Hierzu ist die erfindungsgemäße Ablage von großem Vorteil, weil durch einen eigens hierfür vorgesehenen Platz in unmittelbarer Nähe der Patchstellen, nämlich innerhalb des Patchmoduls, Staubschutzkappen abgelegt werden können bzw. solche Staubschutzkappen im Bedarfsfall direkt zur Hand sind. Die Erfahrung zeigt nämlich, dass sonst die Gefahr besteht, Staubschutzkappen zu verlieren bzw. im Bedarfsfall eigens beschaffen oder jedenfalls nach ihnen suchen zu müssen.

Daher richtet sich die Erfindung auf einen Stapel aus Patchmodulen, der mit zumindest einer bereits in einer der Ablagen vorgesehenen Staubschutzkappe versehen ist.

Die erfindungsgemäße Ablage kann natürlich auch für andere Zwecke benutzt werden, insbesondere für spezifische Werkzeuge zur Benutzung an dem Patchmodul und insbesondere an den Patchstellen. Weiter unten wird hierauf näher eingegangen. In Betracht kommen zum Beispiel spezielle Werkzeuge zum Lösen von Bestandteilen einer Patchstelle, beispielsweise spezielle flache Steckwerkzeuge zum Lösen von Rastverbindungen. Solche Rastverbindungen sind nicht unbedingt zur Sicherung der an den Kabelenden vorgesehenen Steckverbindungselemente vorgesehen, sondern können auch diese aufnehmenden Buchsen in einer Halterung sichern. Dann kann es zum Ausbauen einer solchen Buchse nötig oder jedenfalls praktisch und effektiv sein, mit einem Spezialwerkzeug zu arbeiten und dieses auch direkt zur Hand zu haben.

Wie eingangs bereits erläutert, kann das Patchmodul auch Spleißstellenablagen aufweisen, zum Beispiel in sogenannten Spleißkassetten. Diese Spleißkassetten können zum Beispiel gestapelt sein. Die Patchstellen können lösbare Verbindungen zu den Spleißstellen herstellen, und zwar mit sogenannten Pigtail-Kabeln.

Die Spleißstellenablagen sind, beispielsweise als Spleißkassetten (-stapel) vorzugsweise auf einer Trägerplatte vorgesehen. Vorzugsweise ist die Ablage für zum Beispiel die Staubschutzkappen außerhalb der für die Spleißstellenablage vorgesehenen Fläche der Trägerplatte vorgesehen und durch eine Zwischenwand davon getrennt. Damit kommt der Benutzer den Spleißstellenablagen bei der Benutzung der Ablage nicht nah und kann der Bereich bei den Spleißstellenablagen ungestört zum Beispiel auch für die Verlegung der dorthin führenden Kabel und Fasern benutzt werden.

Die bereits erwähnten Pigtail-Kabel können zwischen den Patchstellen und den Spleißstellenablagen verlaufen und sind vorzugsweise vorinstalliert, also bereits im Auslieferungszustand des Patchmoduls eingelegt. Ferner können Sie in der vorinstallierten Form bereits mit einem Steckverbindungselement an den lösbaren Verbindungseinrichtungen eingesteckt sein. Grundsätzlich gilt die bevorzugte Vorinstallation von Kabeln zu einer Seite (von den Patchstellen aus) auch unabhängig von dem Spezialfall der Pigtail-Kabel zu den Spleißstellen. Die entsprechenden Patchstellen können mit den bereits erwähnten Staubschutzkappen abgedeckt sein (ebenfalls bevorzugterweise vorinstalliert). Diese Staubschutzkappen können dann bei Anstecken weiterer Kabel (insbesondere Patchkabel) in die Ablage gelegt werden, zumindest teilweise.

Das Patchmodul ist schwenkbar. In einem Teil der Schwenkposition sind die Patchstellen besonders gut zugänglich (oder überhaupt nur zugänglich). Außerdem können die bereits erwähnten Spleißstellenablagen in einem Teil der Schwenkposition zugänglich sein, in einem anderen nicht.

Erfindungsgemäß ist dabei an einer im eingeschwenkten Zustand vorderen und zu der Schwenkachse entgegengesetzten Ecke des Patchmoduls die Ablage vorgesehen. Hier ist sie besonders gut zugänglich und stört andere Funktionsbereiche nicht.

Die Schwenkachse ist frei wählbar an einer von zwei vorderen Ecken angebracht. Beim Schwenkachsentausch kann dann ein die Ablage enthaltendes Teil gegen ein die Schwenkachse enthaltendes Teil ausgetauscht werden. Es können auch zwei weitgehend zueinander spiegelsymmetrische Teile benutzt werden, die wahlweise jeweils die Schwenkachse enthalten und es kann dabei vorzugsweise in beiden Teilen eine Ablage vorhanden sein.

Die mehrfach erwähnten Patchstellen sind in einer Mehrzahl vorgesehen, zum Beispiel 12, 24 oder mehr. Sie sind vorzugsweise in einer Reihe (oder einer Mehrzahl Reihen) angeordnet, und zwar vorzugsweise horizontal. Die Ablage kann benachbart zu dieser Reihe und in Bezug auf eine typische Benutzerposition vorn vorgesehen sein.

In dieser Situation kann das Bauteil mit der Ablage außerdem zum seitlichen Halten einer Schiene mit Biegeschutzelementen für die Patchkabel dienen, welche Schiene den Patchstellen vorgelagert ist (in Richtung zur Benutzerposition) und insbesondere parallel dazu und vorzugsweise horizontal verlaufen kann.

Eine weitere Ausgestaltung sieht in der Nachbarschaft der Patchstellen, insbesondere nächstbenachbart dazu und in einer 1:1-Beziehung zu den Patchstellen, Durchgangsstellen für durchlaufende Kabel als Alternative zu den durch die Patchverbindungen kombinierten Patch- und Pigtail-Kabeln vor. Solche Durchgangsstellen können vorteilhaft benutzt werden, um besonders wichtige und sicherheitsbedürftige Verbindungen ohne prinzipiell störungsanfällige Steckverbindungen zu verlegen. In diesem Sinn können auch bereits vorhandene Patchverbindungen nachträglich gelöst werden und durch ein solches durchlaufendes Kabel ersetzt werden oder, umgekehrt, können solche durchlaufenden Kabel nachträglich durch die gepatchte Kombination aus einem Patch- und einem Pigtail-Kabel ersetzt werden. Im einen Fall muss dann eine zum Beispiel in der Ablage bevorratete Staubschutzkappe in die nach einer Seite frei werdende Patchverbindungsstelle gesteckt werden und im anderen Fall, bei Wiedernutzung dieser Stelle, abgenommen und dann in der Ablage untergebracht werden.

Die Ablage ist vorzugsweise, bezogen auf die normale Montage- und Nutzungsposition des Patchmoduls, ausschließlich nach oben offen, also nicht nur nach unten, sondern auch seitlich vollständig geschlossen. Das gilt natürlich in einem technisch vernünftigen Maß, also nicht für derart kleine Öffnungen, dass typische Teile wie zum Beispiel Staubschutzkappen nicht hindurchfallen könnten (also zum Beispiel nicht für Öffnungen mit einem Durchmesser von höchstens 2 mm, oder sogar höchstens 1 mm). Die gelagerten Teile, insbesondere Staubschutzkappen, fallen dann selbst bei Erschütterungen oder etwas unachtsamem Hineinlegen nicht aus der Ablage heraus.

Ferner ist die Ablage vorzugsweise ausschließlich für den beschriebenen Zweck vorgesehen und nicht etwa gleichzeitig noch Unterbringungsraum für LWL-Kabel oder Aufnahmeeinrichtungen dafür.

Hinsichtlich des bereits erwähnten Werkzeugs, insbesondere einer speziellen Pinzette, ist es bevorzugt, dass dieses in der Ablage fixiert werden kann und dazu eine Einrichtung in der Ablage vorgesehen ist. Es kann sich zum Beispiel um einen Stift handeln, der zum Beispiel nach oben hoch steht und auf den das Werkzeug beispielsweise mit einer Bohrung darin aufgesteckt werden kann. Dann ist eine besonders sichere Lage des Werkzeugs möglich und es können zum Beispiel zusätzlich daneben untergebrachte Staubschutzkappen sicherer gegriffen werden, weil das Werkzeug in seiner fixierten Position weniger stört.

Erfindungsgemäß ist das Patchmodul Bestandteil eines Stapels aus gleichartigen Patchmodulen, wobei die Stapelrichtung vorzugsweise mit der bereits erwähnten Schwenkachse zusammenfällt. Die Erläuterungen weiter oben zum Herausschwenken des Moduls beziehen sich dann also auf eine Position in dem Stapel und eine zumindest teilweise herausgeschwenkte Position. Die Patchstellen können dabei benachbart zu einer in Bezug hierauf vorderen Seite vorgesehen sein wie bei den Ausführungsbeispielen, während weiter dahinter zum Beispiel Spleißstellenablagen oder -kassetten untergebracht werden können. Ferner kann ein Stapel an Patchmodulen Bestandteil eines Verteilerschranks sein. Ein solcher Verteilerschrank kann auch eine Mehrzahl Patchmodulstapel enthalten.

Eine Kabelführung, etwa in der oben beschriebenen Weise, kann sich erfindungsgemäß mit dem jeweiligen Schwenkmodul mitdrehen und z. B. relativ zu den Halteplatten fest realisiert sein, wozu auf das Ausführungsbeispiel verwiesen wird. Dies erlaubt eine besonders einfache und stabile Ausgestaltung.

Wie erwähnt bezieht sich die Erfindung auf eine Mehrzahl Spleißmodule, die in serieller Weise als Stapel realisiert sind, nämlich in Richtung der Schwenkachse gereiht oder gestapelt sind (also z. B. horizontal oder vertikal). Ferner können die Spleißmodule in solcher Weise gereiht auch in einem an sich bekannten Verteilerschrank untergebracht sein, insbesondere in der beschriebenen Stapelbauform und insbesondere mit einer Mehrzahl Stapel darin. Es kann erneut auf den bereits zitierten Stand der Technik verwiesen werden.

Im Folgenden wird die Erfindung anhand eines Ausführungsbeispiels näher erläutert, wobei die einzelnen Merkmale im Rahmen der Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: eine perspektivische Darstellung eines vereinfachten erfindungsgemäßen Patchmoduls,
- Figur 2: einen Ausschnitt aus Figur 1 vergrößert,
- Figur 3: eine Variante zu dem Patchmodul aus Figur 1,
- Figur 4: eine perspektivische Ansicht eines in Figur 1 rechtsform eingezeichneten Bauteils des Patchmoduls und
- Figur 5: im unteren Teil eine Draufsicht und im oberen Teil eine Schnittansicht zu Figur 4.

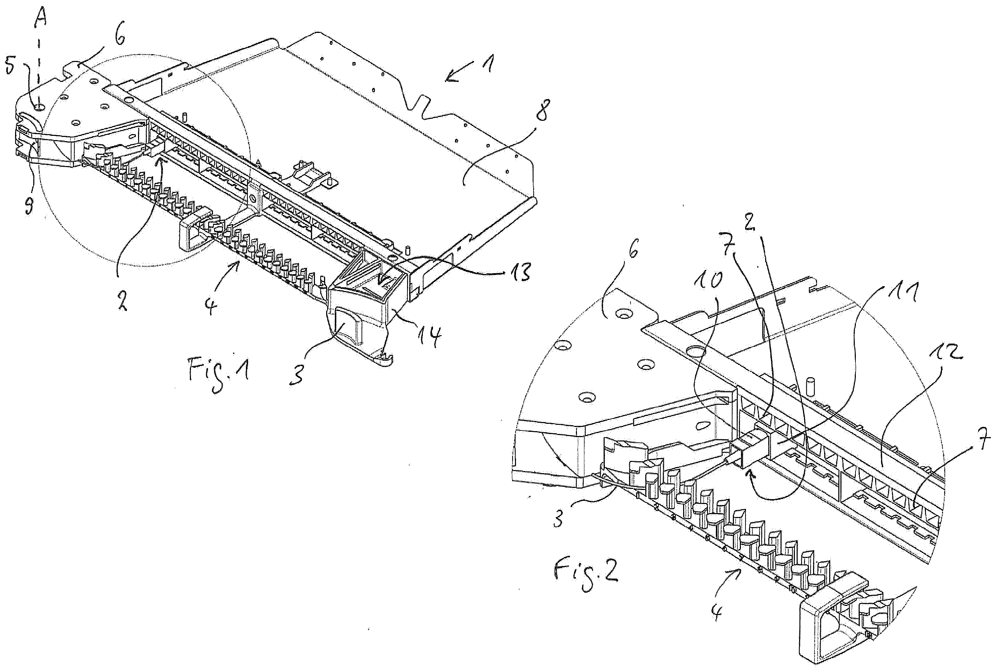

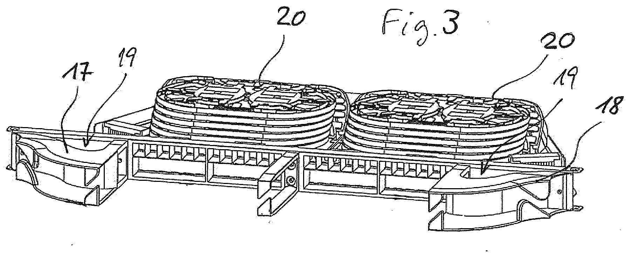

Zunächst wird zum Verständnis des Gesamtzusammenhangs auf die beiden bereits zitierten Dokumente EP 2 221 650 A1 und EP 3 511 753 A1 verwiesen. Insbesondere zeigen die Figuren 1 und 3 in der erstgenannten einen einschlägigen Verteilerschrank mit einer Mehrzahl Spleißmodulstapel und zeigt die Figur 2 dort einen solchen Spleißmodulstapel mit dort rechts vorne liegender Schwenkachse A. In dem zweitgenannten Zitat sieht man den Verteilerschrank in Figur 8 und einen Spleißmodulstapel mit ebenfalls rechts vorne liegender Schwenkachse A in Figur 7. Figur 6 dort zeigt ein einzelnes schwenkbares Spleißmodul aus dem Stapel mit vorne liegenden steckbaren Patchstellen und dahinter zwei vertikalen Stapeln aus einer Vielzahl Spleißkassetten, die jeweils eine Mehrzahl Spleißstellenablagen enthalten.

Figur 1 der vorliegenden Anmeldung entspricht weitgehend dieser zuletzt beschriebenen Figur 6, wobei allerdings die Schwenkachse A diesmal links vorne liegt. Das dargestellte Spleißmodul 1 ist zur Vereinfachung ohne Spleißstellenablagen, d. h. ohne die einschlägigen Spleißkassetten gezeigt, die man sich aber analog zu der Figur 6 in der EP 3 511 753 A1 auf der Trägerplatte 8 hinzudenken kann. Dieses Spleißmodul 1 ist um die Schwenkachse A schwenkbar.

**In** Figur 2 erkennt man außerdem, dass an der Patchstelle 2 ein eingezeichnetes und an dem Patchkabel 3 angebrachtes Steckverbindungselement 10 in eine Buchse 11 eingesteckt ist, die ihrerseits in einer Querformat-Öffnung einer querlaufenden Schiene 12 gehalten ist. Wenn das Steckverbindungselement 10 aus dieser Buchse 11 abgezogen wäre, könnte eine hier nicht eingezeichnete, aber an sich aus dem Stand der Technik bekannte Staubschutzkappe stattdessen auf die Buchse aufgesteckt werden oder sein. Eine solche Staubschutzkappe kann in der in Figur 1 vorn eingezeichneten und allseitig umschlossenen Ablage 13 untergebracht werden, die ersichtlich an dem zu der Schwenkachse A entgegengesetzten Ende der Vorderseite des Patchmoduls 1 in einem zu dem die Schwenkachse A enthaltenen Bauteil 6 komplementären Bauteil 14 ausgebildet ist. Dieses enthält im Übrigen weiter vorn noch eine Halterung 3 zum Führen von Patchkabeln, die zu der rechten Hälfte der insgesamt gezeigten Patchstellen 2 gehören.

Auf der anderen Seite, also links vorn, erkennt man ein stabil aus Metallplatten zusammengeschraubtes Bauteil 6 mit der Schwenkachse A darin. Auch dieses enthält eine Führung 9 für Patchkabel, hier die Patchkabel der linken Hälfte der Patchstellen 2, wobei die Führung 9 aus einem Elastomer-Werkstoff besteht, so dass die Kabel hindurchgesteckt werden können, und zwar in einem die geometrische Schwenkachse A enthaltenden Raum unter dem Bohrloch 5. Dieses Bohrloch 5 dient zur Verbindung mit einem darüberliegenden Modul, wobei im Rahmen dieser Verbindung die Schwenkachse realisiert wird.

Außerdem erkennt man noch eine zu den Patchstellen vorgelagerte Reihe 4 von Führungsstiften, die die Patchkabel aufnehmen und voneinander trennen und dabei zu kleine Biegeradien vermeiden.

Figur 3 zeigt außerdem im hinteren Bereich nebeneinander und spiegelsymmetrisch zueinander angeordnete Stapel 20 aus Spleißkassetten. Solche Stapel 20 kann man sich auch in Figur 1 in dem offen gelassenen Bereich rechts hinter den Patchstellen 2 vorstellen.

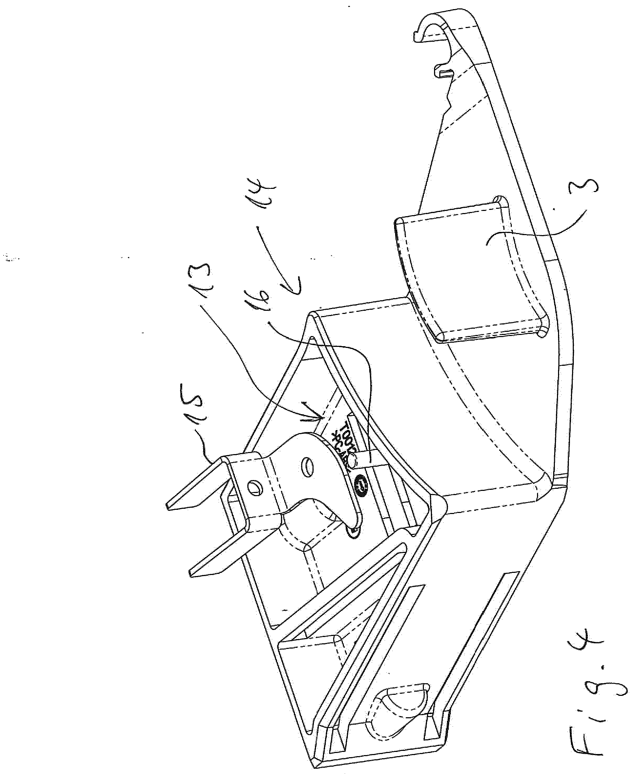

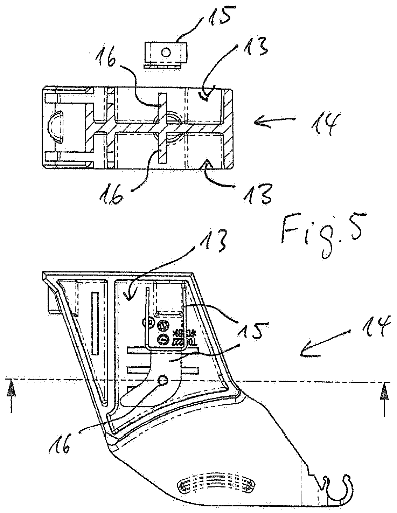

Das Bauteil 14 mit der Ablage 13 ist in den Figuren 4 und 5 näher gezeigt. Ferner findet sich dort ein Steckwerkzeug 15 mit einer pinzettenähnlichen Form und einem Griffteil. Dieses kann auf den dort dargestellten Stift 16 aufgesteckt werden, wozu eine Bohrung in einem Griffteil des Werkzeugs 15 dient. Das Werkzeug 15 kann zum Lösen der Buchse 11 aus der in den Figuren 1 und 2 dargestellten Position dienen, in dem es mit seinen beiden Schenkeln oben und unten zwischen die Buchse 11 und die Schiene geschoben wird und dabei nicht eingezeichnete Rastfedern aus ihrem Eingriff schiebt. Dann kann die Buchse nach (bezüglich Figur 1 und 2) rechts oben bzw. hinten durchgeschoben werden.

In der dargestellten Situation gibt es beidseits des und auf dem fixierten Werkzeug 15 noch Platz für Staubschutzkappen, bei diesem Ausführungsbeispiel allerdings weniger als die Zahl der Patchstellen 2, nämlich weniger als 24. Das liegt daran, dass die Staubschutzkappen im ausgelieferten Zustand des Patchmoduls bzw. des daraus aufgebauten Stapels oder damit ausgestatteten Verteilerschranks auf den entsprechenden Buchsen 11 vormontiert aufgesteckt sind, wobei an den anderen (hinteren) Seiten der Buchsen 11 entsprechende Pigtail-Kabel vorinstalliert sind, die bereits zu den Spleißstellenablagen führen. Nur eine kleinere Zahl solcher vorbereiteter Patchverbindungen wird bei der Montage des Patchmoduls 1 nicht genutzt oder zu einem späteren Zeitpunkt durch eine durchgehende Verbindung ersetzt. Eine solche durchgehende Verbindung besteht in einer die in den Figuren 1 und 2 über den Patchstellen 2 eingezeichneten Öffnungen 7 in der Schiene 12 durchsetzenden LWL-Leitung. Wie bereits erwähnt sollen für solche Fälle in der Ablage Staubschutzkappen bereitliegen.

Figur 3 zeigt eine Alternative zu der Variante aus den Figuren 1 und 2. Hier ist das die Schwenkachse (ganz links) enthaltende Bauteil 17 weniger massiv ausgeführt als bei der Variante in Figur 1 und dafür als Bauteil identisch mit dem spiegelsymmetrisch auf der anderen Seite (von rechts) vorgesehenen Bauteil 18 ausgeführt. Im Fall eines Schwenkachsenwechsels muss die Achse in Form eines durchgehenden Achsstabs einfach von den links erkennbaren Löchern in die rechts erkennbaren Löcher des spiegelsymmetrischen Bauteils 18 umgesteckt werden. Beide Bauteile 17, 18 enthalten jeweils an ihrer Oberseite eine Ablage, wie die Bezugszeichen 19 zeigen.

Bei der Variante aus den Figuren 1 und 2 müsste bei einem Achsenwechsel das Bauteil 14 vorn rechts gegen das Bauteil 6 vorn links getauscht werden, wobei beide Bauteile jeweils um 180° zu drehen wären. Deswegen enthält das Bauteil 14 vorn rechts nicht nur nach oben sondern auch nach unten eine Ablage 13.

## Patentansprüche

1. Stapel aus einer Mehrzahl gleichartiger Patchmodule (1) mit jeweils einer Mehrzahl Patchstellen (2) zum LWL-Kabelmanagement und mit einer nach oben offenen Ablage (13, 19) für eine Staubschutzkappe, die für unbenutzte Patchstellen (2) vorgesehen ist,
wobei die Patchmodule (1) jeweils eine solche Ablage (13, 19) enthalten und zumindest eine Staubschutzkappe für eine Patchstelle (2) vorgesehen und in einer solchen Ablage (13, 19) abgelegt ist,
wobei die Patchmodule (1) jeweils um eine Schwenkachse (A) zwischen einer ausgeschwenkten Position mit zugänglichen Patchstellen (2) und einer eingeschwenkten Position verschwenkbar ausgelegt sind,
wobei bei den Patchmodulen (1) jeweils die Ablage (13, 19) an einer zu der Schwenkachse (A) entgegengesetzten und zu den Patchstellen benachbarten Ecke vorgesehen ist,
und wobei bei den Patchmodulen (1) jeweils die Schwenkachse (A) wählbar an einer von zwei Ecken angebracht werden kann; **dadurch gekennzeichnet, dass** bei den Patchmodulen (1) jeweils ein die Ablage (13, 19) enthaltendes Teil (14, 18) bei einem Schwenkachsenwechsel gegen ein die Schwenkachse (A) enthaltendes Teil (6, 17) ausgetauscht werden kann.

2. Stapel aus einer Mehrzahl Patchmodule (1) nach Anspruch 1, wobei die Patchmodule (1) jeweils Spleißstellenablagen aufweisen, insbesondere in Spleißkassetten (20), welche Spleißstellenablagen in einer Spleißstellenfläche auf einer Trägerplatte (8) des Patchmoduls (1) vorgesehen sind, wobei die Ablage außerhalb der Spleißstellenfläche und davon durch eine Zwischenwand getrennt vorgesehen ist.

3. Stapel aus einer Mehrzahl Patchmodule (1) nach Anspruch 1 oder 2, wobei die Patchmodule (1) jeweils Kabel aufweisen, insbesondere Pigtail-Kabel zwischen den Patchstellen (2) und den Spleißstellenablagen, welche Kabel an den Patchstellen jeweils in einer lösbaren Verbindungseinrichtung enden.

4. Stapel aus einer Mehrzahl Patchmodule (1) nach einem der vorstehenden Ansprüche, bei welchen Patchmodulen die Patchstellen (2) in zumindest einer Reihe angeordnet sind und die Ablagen (13, 19) benachbart zu und in Bezug auf eine Bedienerposition vor der Patchstellenreihe angeordnet sind.

5. Stapel aus einer Mehrzahl Patchmodule (1) nach Anspruch 4, bei welchen Patchmodulen die Ablagen (13) integriert sind in jeweils einem Bauteil (14), das eine der Patchstellenreihe vorgelagerte Schiene mit Biegeschutzelementen (4) für Patchkabel seitlich hält.

6. Stapel aus einer Mehrzahl Patchmodul (1) nach einem der vorstehenden Ansprüche, bei dem die Ablagen (13,19) nach oben offene, aber im Übrigen allseitig umschlossene Vertiefungen sind.

7. Stapel aus einer Mehrzahl Patchmodule (1) nach einem der vorstehenden Ansprüche, bei dem die Ablagen (13, 19) frei von LWL-Kabeln und Aufnahmeeinrichtungen für LWL-Kabel sind.

8. Stapel aus einer Mehrzahl Patchmodule (1) nach einem der vorstehenden Ansprüche mit Werkzeugen (15) zum Einsatz an den Patchmodulen (1), insbesondere Werkzeugen (15) zum Einsatz an den Patchstellen (2), welche Werkzeuge (15) in den Ablagen (13, 19) abgelegt werden können oder sind.

9. Stapel aus einer Mehrzahl Patchmodule (1) nach Anspruch 8 mit jeweils einer Fixiereinrichtung in den Ablagen (13, 19) für die Werkzeuge (15), insbesondere jeweils einem Stift (16) zum Aufsetzen jeweils eines Werkzeugs (15).

10. Stapel aus einer Mehrzahl Patchmodule (1) nach einem der vorstehenden Ansprüche, welche entlang einer Stapelrichtung, nämlich entlang der Schwenkachse (A), übereinander gestapelt sind, wobei die Patchmodule (1) aus dem Stapel zur Zugänglichkeit zumindest der Patchstellen (2) herausbewegt, insbesondere herausgeschwenkt, werden können.

11. Stapel nach Anspruch 10 mit einem Gehäuse um die gestapelten Patchmodule herum, aus welchem Gehäuse die Patchmodule (1) herausbewegt werden können, wobei die Patchstellen (2) benachbart zu einer für diese Bewegung offenen Seite des Gehäuses angeordnet sind.

12. Verteilerschrank für LWL-Kabelmanagement mit einer Mehrzahl Stapel nach einem der Ansprüche 1 bis 11.

13. Verwendung eines Stapels aus einer Mehrzahl gleichartiger Patchmodule (1) mit jeweils einer Mehrzahl Patchstellen (2) zum LWL-Kabelmanagement und mit einer nach oben offenen Ablage (13, 19) für eine Staubschutzkappe, die für unbenutzte Patchstellen (2) vorgesehen ist, wobei die Patchmodule (1) jeweils eine solche Ablage (13, 19) enthalten, wobei die Patchmodule (1) jeweils um eine Schwenkachse (A) zwischen einer ausgeschwenkten Position mit zugänglichen Patchstellen (2) und einer eingeschwenkten Position verschwenkbar ausgelegt sind, wobei bei den Patchmodulen (1) jeweils die Ablage (13, 19) an einer zu der Schwenkachse (A) entgegengesetzten und zu den Patchstellen (1) benachbarten Ecke vorgesehen ist,
und wobei bei den Patchmodulen (1) jeweils die Schwenkachse (A) wählbar an einer von zwei Ecken angebracht werden kann und jeweils ein die Ablage (13, 19) enthaltendes Teil (14, 18) bei einem Schwenkachsenwechsel gegen ein die Schwenkachse (A) enthaltendes Teil (6, 17) ausgetauscht werden kann,
bei welcher Verwendung eine Staubschutzkappe für eine Patchstelle (2) in eine der Ablagen (13, 19) abgelegt wird und der Stapel damit zu einem Stapel nach einem der Ansprüche 1-11 wird.

14. Verwendung eines Verteilerschranks für LWL-Kabelmanagement mit einer Mehrzahl Stapel, welche Stapel jeweils aufweisen eine Mehrzahl gleichartiger Patchmodule (1) mit jeweils eine Mehrzahl Patchstellen (2) zum LWL-Kabelmanagement und eine nach oben offenen Ablage (13, 19) für eine Staubschutzkappe, die für unbenutzte Patchstellen (2) vorgesehen ist, wobei die Patchmodule (1) jeweils eine solche Ablage (13, 19) enthalten, wobei die Patchmodule (1) jeweils um eine Schwenkachse (A) zwischen einer ausgeschwenkten Position mit zugänglichen Patchstellen (2) und einer eingeschwenkten Position verschwenkbar ausgelegt sind, wobei bei den Patchmodulen (1) jeweils die Ablage (13, 19) an einer zu der Schwenkachse (A) entgegengesetzten und zu den Patchstellen (1) benachbarten Ecke vorgesehen ist,
und wobei bei den Patchmodulen (1) jeweils die Schwenkachse (A) wählbar an einer von zwei Ecken angebracht werden kann und jeweils ein die Ablage (13, 19) enthaltendes Teil (14, 18) bei einem Schwenkachsenwechsel gegen ein die Schwenkachse (A) enthaltendes Teil (6, 17) ausgetauscht werden kann,
bei welcher Verwendung eine Staubschutzkappe für eine Patchstelle (2) in einer der Ablagen (13, 19) abgelegt wird und der Verteilerschrank damit zu einem Verteilerschrank nach Anspruch 12 wird.

15. Verwendung eines Stapels nach einem der Ansprüche 1-11 oder eines Verteilerschranks nach Anspruch 12, bei welcher Verwendung ein Werkzeug (15) in eine der Ablagen (13, 19) abgelegt und/oder ein Werkzeug (15) aus einer der Ablagen (13, 19) entnommen und an einem der Patchmodule (1) eingesetzt wird.

## Claims

1. Stack of a plurality of patch modules (1) of the same type, each with a plurality of patch points (2) for fiber optic cable management and with an upwardly open storage compartment (13, 19) for a dust protection cap, which is provided for unused patch points (2),
wherein the patch modules (1) each contain such a storage compartment (13, 19) and at least one dust protection cap for a patch point (2) is provided and is deposited in such a storage compartment (13, 19),
wherein the patch modules (1) are each designed to be pivotable about a pivot axis (A) between a swung-out position with accessible patch points (2) and a swung-in position,
the patch modules (1) each having the storage compartment (13, 19) provided at a corner opposite the pivot axis (A) and adjacent to the patch points,
and wherein in each of the patch modules (1) the pivot axis (A) can be selectably attached to one of two corners; **characterized in that**
in the patch modules (1), a part (14, 18) containing the storage compartment (13, 19) can be exchanged for a part (6, 17) containing the pivot axis (A) when the pivot axis is changed.

2. Stack of a plurality of patch modules (1) according to claim 1, wherein the patch modules (1) each have splice point receivers, in particular in splice cassettes (20), which splice point receivers are provided in a splice point area on a carrier plate (8) of the patch module (1), wherein the storage compartment is provided outside the splice point area and separated therefrom by an intermediate wall.

3. Stack of a plurality of patch modules (1) according to claim 1 or 2, wherein the patch modules (1) each have cables, in particular pigtail cables between the patch points (2) and the splice point receivers, which cables each terminate at the patch points in a detachable connecting device.

4. Stack of a plurality of patch modules (1) according to one of the preceding claims, in which patch modules the patch points (2) are arranged in at least one row and the storage compartments (13, 19) are arranged adjacent to and in front of the row of patch points with respect to an operator position.

5. Stack of a plurality of patch modules (1) according to claim 4, in which patch modules the storage compartments (13) are integrated in a respective component (14) which laterally holds a rail with bending protection elements (4) for patch cables, which rail is positioned in front of the row of patch points.

6. Stack of a plurality of patch modules (1) according to one of the preceding claims, wherein the storage compartments (13, 19) are depressions open at the top but otherwise enclosed on all sides.

7. Stack of a plurality of patch modules (1) according to one of the preceding claims, wherein the storage compartments (13, 19) are free of optical fiber cables and holding devices for optical fiber cables.

8. Stack of a plurality of patch modules (1) according to one of the preceding claims with tools (15) for use on the patch modules (1), in particular tools (15) for use on the patch points (2), which tools (15) can be or are deposited in the storage compartments (13, 19).

9. Stack of a plurality of patch modules (1) according to claim 8, each with a fixing device in the storage compartments (13, 19) for the tools (15), in particular a pin (16) for placing a tool (15) respectively.

10. Stack of a plurality of patch modules (1) according to one of the preceding claims, which are stacked one above the other along a stacking direction, namely along the pivot axis (A), wherein the patch modules (1) can be moved, in particular pivoted, out of the stack to make at least the patch points (2) accessible.

11. Stack according to claim 10, comprising a housing around the stacked patch modules, from which housing the patch modules (1) can be moved out, wherein the patch points (2) are arranged adjacent to a side of the housing open for this movement.

12. Distribution cabinet for fiber optic cable management comprising a plurality of stacks according to one of claims 1 to 11.

13. Use of a stack of a plurality of patch modules (1) of the same type, each having a plurality of patch points (2) for fiber-optic cable management and having an upwardly open storage compartment (13, 19) for a dust protection cap, which is provided for unused patch points (2), the patch modules (1) each containing such a storage compartment (13, 19), wherein the patch modules (1) are each designed to be pivotable about a pivot axis (A) between a swung-out position with accessible patch points (2) and a swung-in position, wherein in the patch modules (1) the storage compartment (13, 19) is provided at a corner opposite to the pivot axis (A) and adjacent to the patch points (1),
and wherein the pivot axis (A) of the patch modules (1) can be selectably attached to one of two corners and a part (14, 18) containing the storage compartment (13, 19) can be exchanged for a part (6, 17) containing the pivot axis (A) when the pivot axis is changed,
in which use a dust cap for a patch point (2) is deposited in one of the storage compartments (13, 19) and the stack thus becomes a stack according to one of claims 1-11.

14. Use of a distribution cabinet for fiber optic cable management with a plurality of stacks, which stacks each have a plurality of patch modules (1) of the same type, each having a plurality of patch points (2) for fiber optic cable management and an upwardly open storage compartment (13, 19) for a dust protection cap, which is provided for unused patch points (2), the patch modules (1) each containing such a storage compartment (13, 19), wherein the patch modules (1) are each designed to be pivotable about a pivot axis (A) between a swung-out position with accessible patch points (2) and a swung-in position, wherein in the patch modules (1) the storage compartment (13, 19) is provided in each case at a corner opposite the pivot axis (A) and adjacent to the patch points (1),
and wherein the pivot axis (A) of the patch modules (1) can be selectably attached to one of two corners and a part (14, 18) containing the storage compartment (13, 19) can be exchanged for a part (6, 17) containing the pivot axis (A) when the pivot axis is changed,
in which use a dust protection cap for a patch point (2) is deposited in one of the storage compartments (13, 19) and the distribution cabinet thus becomes a distribution cabinet according to claim 12.

15. Use of a stack according to one of claims 1-11 or a distribution cabinet according to claim 12, in which use a tool (15) is deposited in one of the storage compartments (13, 19) and/or a tool (15) is removed from one of the storage compartments (13, 19) and inserted at one of the patch modules (1).

## Revendications

1. Empilement d'une pluralité de modules de raccordement (1) similaires, chacun comportant une pluralité de points de raccordement (2) pour la gestion de câbles à fibres optiques et comportant un réceptacle (13, 19) ouvert vers le haut, pour un couvercle de protection contre la poussière qui est prévu pour les points de raccordement (2) inutilisés,
lesdits modules de raccordement (1) contenant chacun un tel réceptacle (13, 19) et au moins un couvercle de protection contre la poussière étant prévu pour un point de raccordement (2) et étant reçu dans un tel réceptacle (13, 19),
lesdits modules de raccordement (1) étant chacun conçus pour pouvoir pivoter sur un axe de pivotement (A) entre une position pivotée vers l'extérieur rendant les points de raccordement accessibles (2) et une position pivotée vers l'intérieur,
dans chacun des modules de raccordement (1), le réceptacle (13, 19) étant prévu dans un coin opposé à l'axe de pivotement (A) et adjacent aux points de raccordement, et
dans chacun des modules de raccordement (1), l'axe de pivotement (A) pouvant être agencé de manière sélective à l'un des deux coins ; **caractérisé en ce que**, dans chacun des modules de raccordement (1), une partie (14, 18) contenant le réceptacle (13, 19) peut être échangée contre une partie (6, 17) contenant l'axe de pivotement (A) lors du changement de l'axe de pivotement.

2. Empilement d'une pluralité de modules de raccordement (1) selon la revendication 1, dans lequel les modules de raccordement (1) présentent chacun des réceptacles de points d'épissure, notamment dans des cassettes d'épissure (20), lesquels réceptacles de points d'épissure sont prévus dans une surface de points d'épissure sur une plaque de support (8) du module de raccordement (1), ledit réceptacle étant prévu à l'extérieur de ladite surface de points d'épissure et étant séparé de celle-ci par une paroi intermédiaire.

3. Empilement d'une pluralité de modules de raccordement (1) selon la revendication 1 ou 2, dans lequel les modules de raccordement (1) présentent chacun des câbles, notamment des câbles amorces entre les points de raccordement (2) et les réceptacles de points d'épissure, lesquels câbles se terminent chacun par un dispositif de connexion amovible au niveau des points de raccordement.

4. Empilement d'une pluralité de modules de raccordement (1) selon l'une des revendications précédentes, dans lesquels modules de raccordement les points de raccordement (2) sont disposés en au moins une rangée et les réceptacles (13, 19) sont disposés de manière adjacente à la rangée de modules de raccordement et, vu depuis la position de l'opérateur, devant celle-ci.

5. Empilement d'une pluralité de modules de raccordement (1) selon la revendication 4, dans lesquels modules de raccordement les réceptacles (13) sont chacun intégrés dans un composant (14) qui maintient latéralement un rail situé devant la rangée de points de raccordement et doté d'éléments de protection contre la courbure (4) pour câbles de raccordement.

6. Empilement d'une pluralité de modules de raccordement (1) selon l'une des revendications précédentes, dans lequel les réceptacles (13, 19) sont des cavités ouvertes vers le haut mais fermées sur tous les côtés.

7. Empilement d'une pluralité de modules de raccordement (1) selon l'une des revendications précédentes, dans lequel les réceptacles (13, 19) sont exempts de câbles à fibres optiques et de dispositifs de réception de câbles à fibres optiques.

8. Empilement d'une pluralité de modules de raccordement (1) selon l'une des revendications précédentes, comportant des outils (15) destinés à être utilisés sur les modules de raccordement (1), notamment des outils (15) destinés à être utilisés sur les points de raccordement (2), lesquels outils (15) peuvent être ou sont reçus dans les réceptacles (13, 19).

9. Empilement d'une pluralité de modules de raccordement (1) selon la revendication 8, chacun comportant un dispositif de fixation dans les réceptacles (13, 19) pour les outils (15), notamment une broche (16) respective pour la mise en place d'un outil (15) respectif.

10. Empilement d'une pluralité de modules de raccordement (1) selon l'une des revendications précédentes, qui sont empilés les uns au-dessus des autres le long d'une direction d'empilement, à savoir le long de l'axe de pivotement (A), lesdits modules de raccordement (1) pouvant sortir, notamment par pivotement, hors de l'empilement pour permettre l'accès au moins aux points de raccordement (2).

11. Empilement selon la revendication 10, comportant un boîtier autour des modules de raccordement empilés, lesdits modules de raccordement (1) pouvant sortir dudit boîtier, les points de raccordement (2) étant disposés adjacents à un côté du boîtier qui est ouvert pour permettre ladite sortie.

12. Armoire de distribution pour la gestion de câbles à fibres optiques, comportant une pluralité d'empilements selon l'une des revendications 1 à 11.

13. Utilisation d'un empilement d'une pluralité de modules de raccordement (1) similaires, chacun comportant une pluralité de points de raccordement (2) pour la gestion de câbles à fibres optiques et comportant un réceptacle (13, 19) ouvert vers le haut pour un couvercle de protection contre la poussière qui est prévu pour les points de raccordement (2) inutilisés, lesdits modules de raccordement (1) contenant chacun un tel réceptacle (13, 19), lesdits modules de raccordement (1) étant chacun conçus pour pouvoir pivoter sur un axe de pivotement (A) entre une position pivotée vers l'extérieur rendant les points de raccordement accessibles (2) et une position pivotée vers l'intérieur, et, dans chacun des modules de raccordement (1), le réceptacle (13, 19) étant prévu dans un coin opposé à l'axe de pivotement (A) et adjacent aux points de raccordement, et
dans chacun des modules de raccordement (1), l'axe de pivotement (A) pouvant être agencé de manière sélective à l'un des deux coins et une partie (14, 18) contenant le réceptacle (13, 19) pouvant être échangée contre une partie (6, 17) contenant l'axe de pivotement (A) lors du changement de l'axe de pivotement ;
et dans le cadre de cette utilisation, un couvercle de protection contre la poussière pour un point de raccordement (2) est reçu dans l'un des réceptacles (13, 19) et l'empilement devient ainsi un empilement selon l'une des revendications 1 à 11.

14. Utilisation d'une armoire de distribution pour la gestion de câbles à fibre optique, dotée d'une pluralité d'empilements, lesdits empilements présentant chacun une pluralité de modules de raccordement (1) similaires comportant chacun une pluralité de points de raccordement (2) pour la gestion de câbles à fibres optiques et comportant un réceptacle (13, 19) ouvert vers le haut pour un couvercle de protection contre la poussière qui est prévu pour les points de raccordement (2) inutilisés, lesdits modules de raccordement (1) contenant chacun un tel réceptacle (13, 19), lesdits modules de raccordement (1) étant chacun conçus pour pouvoir pivoter sur un axe de pivotement (A) entre une position pivotée vers l'extérieur rendant les points de raccordement accessibles (2) et une position pivotée vers l'intérieur, et, dans chacun des modules de raccordement (1), le réceptacle (13, 19) étant prévu dans un coin opposé à l'axe de pivotement (A) et adjacent aux points de raccordement, et
dans chacun des modules de raccordement (1), l'axe de pivotement (A) pouvant être agencé de manière sélective à l'un des deux coins et une partie (14, 18) contenant le réceptacle (13, 19) pouvant être échangée contre une partie (6, 17) contenant l'axe de pivotement (A) lors du changement de l'axe de pivotement ;
et dans le cadre de cette utilisation, un couvercle de protection contre la poussière pour un point de raccordement (2) est reçu dans l'un des réceptacles (13, 19) et l'armoire de distribution devient ainsi une armoire de distribution selon la revendication 12.

15. Utilisation d'un empilement selon l'une des revendications 1 à 11 ou d'une armoire de distribution selon la revendication 12, dans le cadre de laquelle utilisation un outil (15) est placé dans l'un des réceptacles (13, 19) et/ou un outil (15) est retiré de l'un des réceptacles (13, 19) et utilisé sur l'un des modules de raccordement (1).
